# EUROPÄISCHE PATENTSCHRIFT

(11) **EP 3 826 749 B1**
(45) Veröffentlichungstag und Bekanntmachung des Hinweises auf die Patenterteilung: **20.09.2023**
(21) Anmeldenummer: 19766355.2
(22) Anmeldetag: 03.07.2019
(51) Int. Cl.: B01D 29/15, B01D 29/52, B01D 29/66, B01D 29/82, B01D 35/153, B01D 35/16

(54) **VORRICHTUNG ZUR ABTRENNUNG VON FESTSTOFFEN AUS FLÜSSIGKEITEN UND GASEN**
DEVICE FOR SEPARATING SOLID MATERIALS OUT OF LIQUIDS AND GASES
DISPOSITIF DE SÉPARATION DE MATIÈRES SOLIDES DE LIQUIDES ET DE GAZ

(30) Priorität: 23.07.2018 CH 9022018
(43) Veröffentlichungstag der Anmeldung: 02.06.2021
(73) Patentinhaber: DrM, Dr. Müller AG, 8708 Männedorf (CH)
(72) Erfinder: WETTER, Kevin, 9053 Teufen (CH); MÜLLER, Patrick, 8706 Meilen (CH)
(74) Vertreter: Prins Intellectual Property AG
(86) Internationale Anmeldenummer: PCT/IB2019/055670
(87) Internationale Veröffentlichungsnummer: WO 2020/021363

(56) Entgegenhaltungen:
- EP-A1- 0 555 740
- DE-U1- 9 307 195
- US-A- 1 721 250
- US-A1- 2010 264 100

## Beschreibung

Die Erfindung betrifft eine Vorrichtung zur Abtrennung von Feststoffen aus Flüssigkeiten und Gasen und dem anschliessenden Feststoffaustrag, bestehend aus einem Druckbehälter, einem oder mehreren Filterelementen in einem flexiblen Behälter, z.B. aus Folie oder flexiblem Kunststoff, sowie einem Austragsmechanismus, und deren Anwendung.

Es sind zahlreiche Filtrations-Systeme mit flexiblen Behältern bekannt, die meistens unter den Begriffen "Einwegsystem" oder "Single-Use" einzuordnen sind. Vorteile solcher Systeme sind die Sterilität der Einwegkomponenten, kleinere Investitionskosten und die verminderten Reinigungs- und Validierungskosten der Edelstahl-Stütz- und Druckbehälter, kein Kontaminationsrisiko zwischen zwei Produktzyklen, sowie die hohe Flexibilität und Geschwindigkeit bei Produktewechseln.

EP 2283907A1 beschreibt eine Vorrichtung zur Filtration von Flüssigkeiten mit einem Filterelement in Form einer Kartusche, welche mit einer Kunststofffolie dichtend umhüllt ist und in einem Stützbehälter betrieben wird. Der Feststoff wird während der Filtration in der Kartusche aufgenommen und kann nicht mehr entfernt oder aus dem flexiblen Behälter entfernt werden. Durch die begrenzte Grösse der Filtrationsfläche wird diese Art der Filtration für Suspensionen mit kleinem Feststoffgehalt verwendet.

In WO2012/007222A1 ist ein Filtermodul für den Einmalgebrauch beschrieben, bestehend aus vorzugsweise horizontal anliegenden scheibenförmigen Filterelementen, welche dichtend umhüllt sind von einer flexiblen, dehnbaren Hülle. Für den Betrieb wird die Einheit in einem Positionierrahmen untergebracht, welcher die flexible Hülle bei deren Ausdehnung durch einen angebrachten Innendruck im Unfiltratraum stützt und in deren Dehnung limitiert. Das Auspressen des flexiblen Behälters durch Anbringen eines Druckes ist nicht möglich, sondern nur ein Abzug mittels Vakuum. Zudem ist durch die geometrische Ausdehnung der scheibenförmigen Platten eine Abspülung der Filterflächen nur bedingt möglich und ein Feststoffaustrag kann nicht erfolgen.

DE 3807828 offenbart eine Vorrichtung zur Filtration von Flüssigkeiten innerhalb eines geschlossenen Behälters mit einem mehrteiligen, zusammengeschweissten Deckel aus thermoplastischem Kunststoff und einem Folienschlauch mit darin angeordneten Filterpatronen. Der Deckel und die Filterpatronen sind durch ein Gewinde verbunden. Ein Folienschlauch kann in einem Becher installiert und durch Aufpressen des Deckels von der Umgebung abgedichtet werden, wobei sich die Filterpatronen im Inneren des flexiblen Folienschlauches befinden. Die Vorrichtung bietet keine Lösung für eine Restvolumenfiltration, eine Feststoffreinigung, eine Feststofftrocknung, oder einen Feststoffaustrag. Auch sind keine Anschlüsse vorgesehen für den Austrag von aufkonzentriertem oder trockenem Feststoff.

Weitere Filtervorrichtungen zur Filtration von Flüssigkeiten sind in DE 9307195U1, US 2010/2641 00A1, US 1721250A und EP 0555740A1 beschrieben.

Die gezeigten Lösungen aus dem Stand der Technik erlauben eine Abtrennung von Feststoffen aus Flüssigkeiten und Gasen in einem durch eine flexible Trennwand von der Umgebung abgegrenzten sterilen Bereich. Ein eigentlicher Austrag und die Reinigung und Gewinnung des Feststoffes ist nicht vorgesehen. Häufig werden die flexiblen Behälter nach Gebrauch aufgeschnitten, um den Feststoff auszutragen. Dies hat den Nachteil, dass der Feststoff durch Unterbrechung der Sterilität kontaminiert wird oder dieser in die Umgebung gelangt. Durch die Zerstörung des flexiblen Behälters ist eine Wiederverwendung ausserdem nicht mehr möglich.

### Aufgabe der Erfindung

Aufgabe der Erfindung ist es, eine Vorrichtung zur Abtrennung von Feststoffen aus Flüssigkeiten und Gasen zu schaffen, welches die erwähnten Nachteile beseitigt und ein vereinfachtes Filtrationssystem bietet, welches wiederverwendbar ist und welches ermöglicht, Feststoffe aus Flüssigkeiten und Gasen innerhalb eines flexiblen Behälters unter sterilen Bedingungen und in einem von der Umgebung abgedichteten Bereich abzutrennen, gegebenenfalls zu waschen und zu entfeuchten und anschliessend aus der Vorrichtung auszutragen. Ein Vorteil eines Feststoffaustrages ist die Freistellung der Filtrationsfläche sowie die Regenerierung des Filtrationsbehälters, wodurch ein erneuter Betrieb der Filtration im selben Filtrationsbehälter möglich ist.

Solche Vorrichtungen finden beispielsweise in der Lebensmittelbranche oder in der biopharmazeutischen Industrie Anwendung.

### Beschreibung der Erfindung

Die Aufgabe der Erfindung wird durch eine Vorrichtung zur Abtrennung von Feststoffpartikeln aus Flüssigkeiten und Gasen mit den Merkmalen des Patentanspruchs 1 und durch ein Verfahren zur Filtration von Feststoffen aus Flüssigkeiten oder Gasen mit den Merkmalen des Anspruchs 16 gelöst.

Es wird eine Vorrichtung zur Abtrennung von Feststoffpartikeln aus Flüssigkeiten und Gasen mit einem Druckbehälter und mit mindestens einem oder mehreren Filterelementen offenbart, wobei die Filterelemente in einem flexiblen Behälter aus Kunststoff angeordnet sind, der im Innern des Druckbehälters angeordnet und gegenüber diesem und der Umgebung ausserhalb des Druckbehälters dicht abgeschlossen ist. Der flexible Behälter ist vorzugsweise aus dem Druckbehälter entnehmbar. Erfindungsgemäss umfasst der Druckbehälter mindestens einen Ausgang für den Feststoffaustrag, und der flexible Behälter umfasst mindestens einen Austragsanschluss, wobei der Austragsanschluss des flexiblen Behälters durch den Ausgang des Druckbehälters geführt ist und gegenüber dem Druckbehälter dicht abgeschlossen ist. Dabei sind der Ausgang des Druckbehälters und der Austragsanschluss des flexiblen Behälters mittels eines Verschlussmechanismus dichtend verschliessbar.

Die erfindungsgemässe Vorrichtung ermöglicht die Gewinnung eines möglichst trockenen Feststoffes, eines aufkonzentrierten Feststoffschlammes bei Filtrationsprozessen in flexiblen Behältern, wie auch die totale Entleerung des Filtrationsbehälters und die Regenerierung der Filterflächen für einen erneuten Gebrauch der Filtervorrichtung.

Der Ausgang für den Feststoffaustrag ist vorzugsweise ein Anschlussstutzen, und ist am Behälterboden, am Behältermantel oder am Behälterdeckel des Druckbehälters angeordnet. Der Anschlussstutzen erlaubt es, einen Austragsanschluss, vorzugsweise eine Verlängerung, des flexiblen Behälters durch die Druckbehälterwand durchzuführen und diesen dichtend zu verschliessen.

Nachfolgend an den Ausgang beziehungsweise den Anschlussstutzen für den Feststoffaustrag ist ein Verschlussmechanismus angeordnet.

In einer bevorzugten Ausführungsform ist der Verschlussmechanismus zum Öffnen und Verschliessen des Ausgangs für den Feststoffaustrag eine Klemmvorrichtung, vorzugsweise ein Quetschventil. Vorzugsweise kann der Verschlussmechanismus die Verlängerung des flexiblen Behälters oder den angebrachten Schlauch kontaktlos verschliessen. Dies ist insbesondere bei sterilen Anwendungen vorteilhaft, da keine Stoffe innerhalb des flexiblen Behälters in Kontakt mit dem Ventil kommen. In einer weiteren Ausführung umfasst der Verschlussmechanismus ein Ventil, vorzugsweise ein druckbetriebenes Ventil oder ein manuelles Ventil, beispielsweise ein Kugelhahn, welcher am flexiblen Behälter angeschlossen werden kann. Der Verschlussmechanismus dient dem Verschluss des flexiblen Behälters gegenüber der Umgebung ausserhalb des Druckbehälters. In einer Ausführung dichtet der Verschlussmechanismus zugleich auch den Bereich zwischen dem flexiblen Filtrationsbehälter und dem Druckbehälter gegenüber der Umgebung ab.

Der Austragsanschluss des flexiblen Behälters kann ein Teil oder eine Verlängerung des flexiblen Behälters oder ein mit dem flexiblen Behälter verbundener Schlauch sein, welcher durch den Anschlussstutzen des Druckbehälters und den Verschlussmechanismus geführt und befestigt werden kann.

In einer besonderen Ausführungsform kann die Abdichtung zwischen dem Austragsanschluss des flexiblen Behälters und dem Ausgang des Druckbehälters vorzugsweise mittels einer Dichtung erfolgen. Die Dichtung ist vorzugsweise ein O-Ring oder eine Flachdichtung.

Vorzugsweise sind der Ausgang für den Feststoffaustrag, der sogenannte Anschlussstutzen, und der Austragsanschluss des flexiblen Behälters im unteren Bereich des Druckbehälters und des flexiblen Behälters angeordnet. Dies ermöglicht das einfache Austragen des sedimentierten Feststoffes, welcher sich bei der Spülung durch die Schwerkraft im unteren Bereich des Behälters sammelt. In einer anderen Ausführungsform sind der Ausgang für den Feststoffaustrag und der Austragsanschluss des flexiblen Behälters im seitlichen oder oberen Bereich des Druckbehälters und des flexiblen Behälters angeordnet. Bei stark sedimentierenden Feststoffen ist es vorteilhaft, den Feststoffaustrag im unteren Bereich des Behälters durchzuführen. Die Dimensionen des Ausgangs für den Feststoffaustrag sind so zu wählen, dass sich ein möglichst ungehinderter Abfluss des Feststoffes ergibt. Bei sehr trockenem Feststoff ist somit der Durchmesser des Ausgangs, d.h. des entsprechenden Anschlussstutzens und des Verschlussmechanismus möglichst gross zu wählen. Vorzugsweise beträgt der Durchmesser des Ausgangs für den Feststoffaustrag mindestens 15 mm, noch mehr bevorzugt mindestens 20 mm, besonders bevorzugt mindestens 25 mm. In einer Ausführung weist der Ausgang für den Feststoffaustrag den gleichen Durchmesser wie der Druckbehälter, insbesondere wie der Behältermantel des Druckbehälters auf. Besonders bevorzugt befindet sich der Ausgang für den Feststoffaustrag in dieser Ausführungsform im unteren Bereich des Druckbehälters, und der gesamte Druckbehälterboden wird durch einen Verschlussmechanismus ersetzt.

Vorzugsweise sind die einen oder mehreren Filterelemente hängend im Druckbehälter angeordnet.

In einer Ausführungsform sind mehrere Filterelemente jeweils flach ausgebildet und hängend parallel nebeneinander angeordnet, sodass eine grosse Gesamt-Filterfläche pro Volumen bereitsteht, was vorteilhaft für den Durchfluss und die Filtereffizienz der Vorrichtung ist. Zudem sind die parallel angeordneten Filterelemente zueinander zusammenpressbar. Hierzu sind sie zu einem Filterpaket einer Vielzahl von Filterelementen miteinander verbunden, wobei zwischen den einzelnen Filterelementen über den Grossteil ihrer vertikalen Längserstreckung jeweils ein vorbestimmter Freiraum besteht.

In einer weiteren Ausführungsform ist das mindestens eine Filterelement rund ausgebildet. Unter rund wird verstanden, dass der Durchmesser senkrecht zur Längsrichtung des Filterelements rund ist. Beispielsweise ist in dieser Ausführungsform das mindestens eine Filterelement schlauchförmig ausgebildet. In einer weiteren Ausführungsform ist das mindestens eine Filterelement scheibenförmig ausgebildet. Unter scheibenförmig wird verstanden, dass das mindestens eine Filterelement die Form einer flachen Scheibe aufweist und übereinander stapelbar oder parallel hängend angeordnet sein kann.

Das Filterpaket, bestehend aus einer Vielzahl von parallel angeordneten flächigen, runden oder schlauchförmigen Filterelementen lässt sich aufgrund des Freiraums zwischen den Filterelementen und der zähelastischen Eigenschaften des für den inneren Behälter eingesetzten Kunststoffes zusammenpressen. Die daraus gegebene Flexibilität des Filterpakets bietet dadurch Vorteile bei der Entleerung des Filtrationsbehälters, zum Beispiel während einer Restvolumenfiltration oder eines Feststoffaustrages, da dieser in höherem Masse zusammengepresst werden kann. Die Flexibilität und Kompaktheit der Filterelemente verbessern zudem den Restvolumenaustrag und vermindern den Rohmaterialgehalt.

Der eigentliche flexible Behälter besteht aus einem flexiblen Kunststoff, in dem die einen oder mehreren Filterelemente angeordnet sind. Der Filtrationsprozess geschieht vollständig im abgegrenzten, abgedichteten Raum des flexiblen, inneren Behälters, wobei die zu behandelnden Flüssigkeiten und Gase nur jeweils mit dem Kunststoff des inneren, flexiblen Behälters in Berührung kommen. Dies hat bedeutende Vorteile im Umgang mit aggressiven Medien und der Prozess-Sterilität.

Vorzugsweise ist der innere, flexible Behälter mit den Filterelementen als Ganzes aus dem Druckbehälter entnehmbar, ohne dass die Gase oder die Flüssigkeit mit dem Druckbehälter in Berührung kommen. Dies ermöglicht es, dass die Vorrichtung ein Einwegsystem bietet. Dadurch wird ein aufwändiges Reinigen und Sterilisieren der Vorrichtung überflüssig. Die vorliegende Erfindung ermöglicht aber auch ein Mehrwegsystem, indem der Feststoff mit Spülflüssigkeit oder Gasen durchgespült und von den Filterelementen abgespült werden kann und anschliessend aus der Vorrichtung ausgetragen werden kann. Dadurch kann die Vorrichtung mehrmals für dieselbe Suspension verwendet werden und der flexible Behälter muss nicht nach jedem Durchgang aus dem Druckbehälter entnommen werden.

Der flexible, innere Behälter mit den Filterelementen, der eigentliche Filtrationsbehälter, besteht vollkommen aus Kunststoff, vorzugsweise aus einem zähelastischen Material, ist kompakt faltbar und lagerfähig und kann nach Gebrauch rezykliert oder vollständig durch Verbrennung entsorgt werden. Der äussere Druckbehälter dient dazu, dem System Stabilität zu bieten und das nötige Druckgefälle für die Vor-, Haupt- und Restvolumenfiltration zu liefern.

Entsprechende Stutzen am Druckbehälter erlauben das Durchführen von Ein- und Ausgangsanschlüssen am flexiblen Behälter, um diesen zu Befüllen und zu Entleeren. Diese Anschlüsse sind jeweils so abgedichtet, dass sich auch im Inneren des Druckbehälters, zwischen Druckbehälter-Innenwand und Aussenwand des flexiblen Behälters eine abgedichtete Zone befindet, welche mit Überdruck oder einem Vakuum befüllt werden kann. Dazu befinden sich weitere Stutzen am Druckbehälter.

Die erfindungsgemässe Vorrichtung ist in verschiedenen Varianten realisierbar, wobei sich diese vor allem in der Anordnung der Anschlüsse und des Verschlussmechanismus unterscheiden. Je nach Anwendung ist es von Vorteil, wenn die Ein- und Ausgänge, auch Stutzen genannt, im oberen, seitlichen oder im unteren Bereich des Druckbehälters angeordnet werden können. Diese Ein- und Ausgänge am Druckbehälter erlauben das Durchführen von Ein- und Ausgangsanschlüssen am flexiblen Behälter, um diesen mit einer Suspension, Spülflüssigkeit oder Gasen zu Befüllen und zu Entleeren, beziehungsweise um das Filtrat abfliessen zu lassen. Diese Anschlüsse sind jeweils so abgedichtet, dass sich auch im Inneren des Druckbehälters, zwischen der Druckbehälter-Innenwand und der Aussenwand des flexiblen Behälters eine abgedichtete Zone befindet, welche mit Überdruck oder einem Vakuum befüllt werden kann. Dazu befinden sich weitere Anschlüsse für die Druckluftzufuhr am Druckbehälter, welche wahlweise oben, seitlich oder unten aber mindestens an einer Position definiert werden können. Dies bietet Vorteile in der Prozessflexibilität und der Effizienz der Filtration und Entleerung des Behälters.

Der Filtrationsbehälter ist so gefertigt, dass dieser sehr benutzerfreundlich im Druckbehälter montiert und nach Gebrauch demontiert werden kann. In einer Variante der Erfindung kann der Behältereingang im Innern des Behälters mit einem Schlauch aus flexiblem Kunststoff versehen werden. Dies optimiert den Füllprozess des Behälters. Beispielsweise kann die Suspension mit einem Schlauch im Innern des flexiblen Behälters während der Filtration eingeleitet werden ohne dass der Aufbau einer Feststoffschicht auf den Filterflächen gestört oder der Feststoff von den Filterelementen gespült wird. Bei stark sedimentierenden Feststoffen kann es vorteilhaft sein, die Suspension mit Hilfe eines Schlauches so in den flexiblen Behälter einzuleiten, dass der Feststoff aufgespült wird, dieser somit nicht sedimentiert und die Suspension möglichst homogen vermischt wird. In einer Variante ist das eine innerste Ende des Schlauches mit einer Düse versehen, welche die Einströmung der Suspension vorteilhaft beeinflussen kann.

In einer weiteren Variante der Erfindung ist der Behälterausgang im Innern des flexiblen Behälters mit einem Schlauch aus flexiblem Kunststoff versehen. Dies ermöglicht den Austrag von Suspension oder Feststoffschlamm aus dem Inneren des flexiblen Behälters. Vorteile dieser Anordnung zeigen sich beispielsweise bei einer Blockade der Filterflächen, wobei die Restsuspension aus dem Inneren des Behälters entfernt werden muss und ein Austrag durch den Austragsstutzen nicht erwünscht ist.

In Filtrationsprozessen insbesondere in Eindickungen ist es häufig notwendig, die Filterelemente rückzuspülen, damit die an den Filterelementen aufgebaute Schicht von Feststoffpartikeln abgespült werden kann. Die Anordnung der Mehrzahl von flächigen Filterelementen ermöglicht eine verbesserte Rückspülung und Ablösung der Feststoffpartikel von den Filterelementen. Das Rückspülen der Filterelemente kann den Aufbau einer dichten Schicht von Feststoffpartikeln verhindern und somit zu erhöhtem Filtratdurchfluss führen.

Ein bekanntes Problem bei Filtrationsprozessen ist die Behandlung des Restvolumens im Filtersystem. Die erfindungsgemässe Vorrichtung kann durch das Verwenden des Systems im Druckbehälter das Restvolumen vermindern, indem der flexible Filtrationsbehälter mit einem Aussendruck zusammengedrückt und somit teilweise bis vollständig entleert wird. Vor allem bei sehr teuren Medien kann dies erhebliche Mehrkosten verhindern. Für eine weiter verbesserte Entleerung kann der Filtrationsbehälter zudem mit Gasen (zum Beispiel sterile Luft) durchspült werden.

Die erfindungsgemässe Vorrichtung ermöglicht dank der vollständig abgeschlossenen, sterilen Filterelemente, der erhöhten Filterfläche, der daraus resultierenden hohen Filtereffizienz, der vollständigen Filtration mit verminderten Restvolumenanteilen und dem vereinfachten Austrag von trockenem Feststoff oder Feststoffschlamm eine kostengünstige Filtrationsvorrichtung mit hohen Durchflussmengen, minimierten Reinigungskosten und kurzen Umrüstzeiten bei einem Produktewechsel.

Zusätzlich umfasst die vorliegende Erfindung eine Anwendung der erfindungsgemässen Vorrichtung zur Filtration von Feststoffen aus Flüssigkeiten oder Gasen und zum Austrag des Feststoffs aus der Vorrichtung.

Ein erfindungsgemässes Verfahren zur Filtration von Feststoffen aus Flüssigkeiten oder Gasen und zum Austrag des Feststoffes mittels einer erfindungsgemässen Vorrichtung umfasst die Schritte:
a) Anbringen einer Druckdifferenz zwischen dem Innenraum des flexiblen Behälters und dem Filtratablauf,
b) Befüllen des flexiblen Behälters mit einer Suspension oder Gas,
c) Anbringen eines Unterdruckes im Filtratablauf oder eines Überdrucks im flexiblen Behälter,
d) Auspressen des flexiblen Behälters,
e) Durchspülen des Feststoffes mit Spülflüssigkeiten oder -Gasen durch den Eingangsanschluss,
f) Abspülen des Feststoffes von den Filterelementen durch den tablaufanschluss zur Regeneration der Filterelement für den nächsten Zyklus,
g) Öffnen des Verschlussmechanismus und Austrag des Feststoffes durch den Austragsanschluss des flexiblen Behälters am Ausgang des Druckbehälters.

Die Verfahrensschritte a) bis g) können ein- oder mehrmals wiederholt werden.

Das Befüllen des flexiblen Behälters mit einer Suspension oder Gas in Schritt b) kann beispielsweise durch ein über eine Pumpe erzeugtes Druckgefälle oder einen zwischen Druckbehälterwand und flexiblem Behälter erzeugten Unterdruck erfolgen.

Kombinationen von zwei oder mehreren der oben aufgeführten Ausführungen und Varianten sind denkbar und beansprucht.

Die Erfindung wird anhand von in den Zeichnungen dargestellten Ausführungsbeispielen näher beschriebenen. Es zeigen:
Fig. 1 die Vorrichtung mit einem Druckbehälter in einem Längsschnitt,
Fig. 2 den flexiblen, inneren Behälter der Vorrichtung in einer Ausführung mit flachen, hängenden Filterelementen im Längsschnitt während dem nicht installierten und unbefüllten Zustand,
Fig. 3 die Vorrichtung mit dem installierten flexiblen Behälter im Druckbehälter im Längsschnitt während dem Befüllen,
Fig. 4 die Vorrichtung mit dem installierten flexiblen Behälter im Druckbehälter im Längsschnitt während der Filtration,
Fig. 5 die Vorrichtung mit dem installierten flexiblen Behälter im Druckbehälter während des Zusammenpressens des flexiblen Behälters und der Restvolumenfiltration im Längsschnitt,
Fig. 6 die Vorrichtung mit dem installierten flexiblen Behälter im Druckbehälter während dem Rückspülen der Filterelemente und Ablösen des Feststoffes im Längsschnitt,
Fig. 7 die Vorrichtung mit dem installierten flexiblen Behälter im Druckbehälter während dem Feststoffaustrag und der Regeneration der Filterelemente im Längsschnitt,
Fig. 8 die Vorrichtung mit dem installierten flexiblen Behälter im Druckbehälter während des Zusammenpressens des flexiblen Behälters und dem Feststoffaustrag im Längsschnitt,
Fig. 9 einen Ausschnitt der Vorrichtung mit dem Verschlussmechanismus in einer Variante mit einer abdichtenden Klemmvorrichtung im Längsschnitt,
Fig. 10 einen Ausschnitt der Vorrichtung mit dem Verschlussmechanismus in einer Variante mit druckbetriebenem Ventil und zusätzlicher Abdichtung des Austragsausgangs am flexiblen Behälter im Längsschnitt,
Fig. 11 einen Ausschnitt der Vorrichtung mit dem Verschlussmechanismus in einer Variante mit manuellem Ventil und zusätzlicher Abdichtung des Austragsausgangs am flexiblen Behälter im Längsschnitt,
Fig. 12A-D einen Ausschnitt der Vorrichtung mit dem Verschlussmechanismus in verschiedenen Grössen im geschlossenen Zustand im Längsschnitt,
Fig. 13A-D einen Ausschnitt der Vorrichtung mit dem Verschlussmechanismus in verschiedenen Grössen im offenen Zustand im Längsschnitt,
Fig. 14A-B einen Ausschnitt der Vorrichtung mit dem Verschlussmechanismus mit Ausstragsstutzen im seitlichen unteren Bereich des Druckbehälters im Längsschnitt.

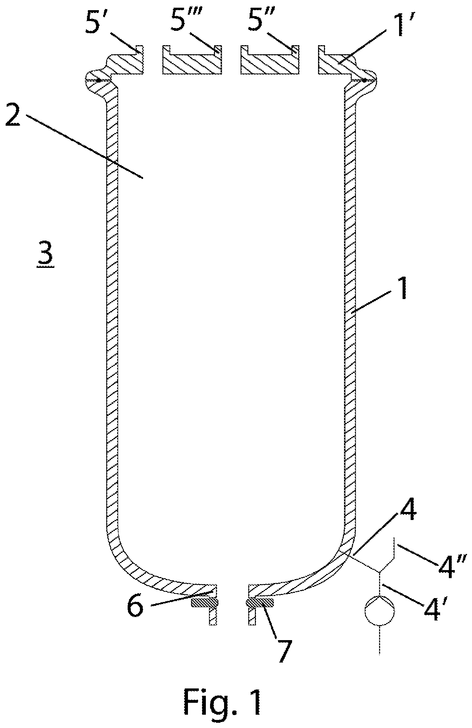

In der Figur 1 wird mit dem Bezugszeichen 1 ein Druckbehälter dargestellt, der mit einem Deckel 1' verschlossen werden kann und dabei eine Druckbehälterzone 2 im inneren des Druckbehälters bildet, welche gegenüber der äusseren Umgebung 3 abgedichtet ist. Mindestens ein Stutzen für eine Druckleitung 4 im Behälterdeckel oder vorzugsweise im Behältermantel des Druckbehälters 1 kann dazu genutzt werden, die innere Druckbehälterzone 2 mit Druck 4' zu belasten oder mit einem Vakuum 4" zu entlüften. In der Druckbehälterwand, vorzugsweise im Deckel 1' befinden sich mind. je ein Eingangs- 5', ein Ausgangs- 5" und ein Filtratablaufstutzen 5"'. Ein weiterer Ausgang 6 für den Austrag von Feststoff und Flüssigkeiten befindet sich bevorzugt im unteren Bereich des Druckbehälters 1.

Anfügend an den Austragsausgang 6 ist ein Verschlussmechanismus 7 angeordnet.

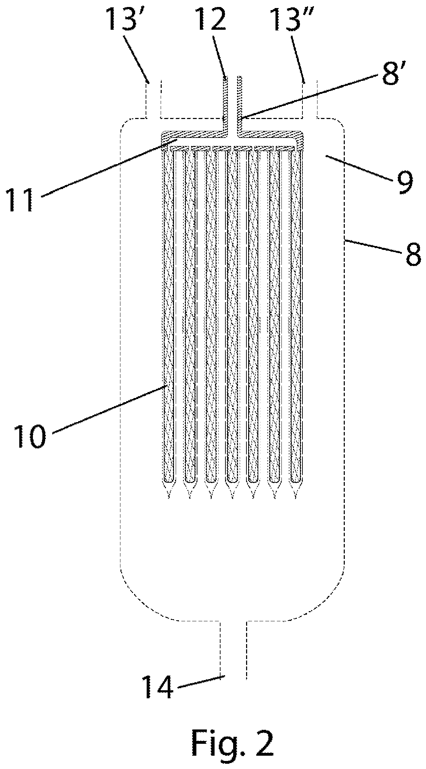

In der Figur 2 wird ein flexibler Behälter im nicht installierten und unbefüllten Zustand dargestellt. Eine flexible Behälterwand 8 grenzt den Inneren Bereich, die Zone 9, dichtend von der äusseren Umgebung ab. Im Innern des flexiblen Behälters 8 sind ein oder mehrere Filterelemente 10 angeordnet. Innerhalb dieser Filterelemente befinden sich Filtratablaufkanäle welche in einem Sammelstück 11 verbunden sind. Das Filtrat fliesst während der Filtration durch die Filterkanäle zum Sammelstück und wird durch den verbundenen Filtratablaufanschluss 12 abgeführt. Der Filtratablaufanschluss 12 führt dabei durch die flexible Behälterwand 8 und ist mit dieser dichtend verbunden 8'. Der flexible Behälter 8 weist vorzugsweise im oberen Bereich mindesten zwei weitere Anschlüsse 13', 13" auf, welche den Einlass der Suspension, einer Spülflüssigkeit oder Gasen in die innere Zone 9 oder den Auslass der Suspension, einer Spülflüssigkeit oder Gasen aus der inneren Zone 9 erlauben. Eine Verlängerung 14 vorzugsweise im unteren Bereich des flexiblen Behälters 8 dient dem Austrag von Feststoff und dem Austrag von unfiltrierter Suspension aus der inneren Zone 9. Dieser Austragsanschluss 14 kann entweder eine Verlängerung des flexiblen Behälters 8 sein oder aus einem der flexiblen Behälterwand 8 verbundenen flexiblen Schlauches aus Folie oder elastischem Material bestehen.

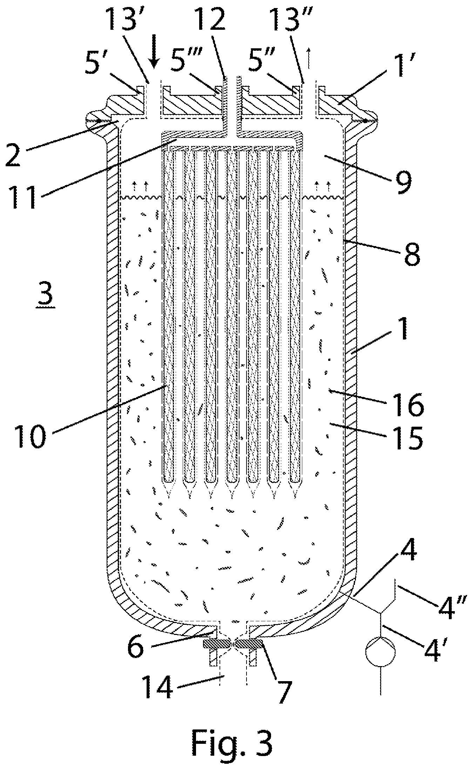

In den Figuren 3-8 werden die Teilprozesse Befüllung, Filtration, Restvolumentfiltration und Spülung, Rückspülung und Regeneration der Filterflächen, Feststoffaustrag und die Totalentleerung sowie die entsprechende Umsetzung der Vorrichtung dargestellt. Diese Prozesse können in jeglicher Reihenfolge, insbesondere wiederholt in mehreren Zyklen durchgeführt werden.

Figur 3 zeigt den Druckbehälter 1 mit dem installierten flexiblen Filtrationsbehälter während der Befüllung des flexiblen Filtrationsbehälters 8 mit Suspension. Der Ausstragsanschluss 14 des flexiblen Behälters 8 wird dabei durch den Austragsstutzen 6 geführt und dichtet die innere Druckbehälterzone 2 von der äusseren Umgebung 3 ab. Der Austragsanschluss 14 wird durch den Verschlussmechanismus 7 dichtend geschlossen, womit auch die innere Zone des Filtrationsbehälters von der äusseren Umgebung 3 abdichtend separiert ist. Die beiden Ein- und Ausgangsanschlüsse 13', 13" des Filtrationsbehälters 8 werden durch die Ein- und Ausgangsstutzen 5', 5" des Druckbehälters 1 geführt und sind ebenfalls dichtend zur Druckbehälterwand verbunden. Der Filtratablaufanschluss 12 des Filtrationsbehälters ist auf ähnliche Weise dichtend durch den Filtratablaufstutzen 5'" des Druckbehälters geführt. In dieser Anordnung wird die innere Zone 9 des Filtrationsbehälters durch den Eingangsanschluss 13' mit Suspension befüllt. Gleichzeitig kann die innere Zone 9 durch den Ausgangsanschluss 13" entlüftet werden. Die Suspension besteht aus einer zu filtrierenden Flüssigkeit 15 mit zu separierenden Feststoffen 16. Im erweiterten Sinne kann unter Suspension auch ein feststoffbehaftetes Gas verstanden werden, wobei das zu filtrierende Gas mit dem Bezugszeichen 15 und der zu separierende Feststoff mit dem Zeichen 16 dargestellt wird. Während der Befüllung ist die innere Druckbehälterzone 2 durch den Stutzen 4 und 4" entlüftet, somit kann sich die flexible Wandung des Filtrationsbehälters 8 den Konturen des Druckbehälters 1 anpassen und wird durch diesen gestützt und in ihrer weiteren Ausdehnung limitiert. In einer Weiterführung der Erfindung kann der flexible Filtrationsbehälter in einer evakuierten Form installiert und durch Anbringen eines Unterdruckes im Stutzen 4 und somit zwischen Druckbehälterwand 1 und flexiblem Behälter 8 (also der inneren Druckbehälterzone 2) geweitet und befüllt werden.

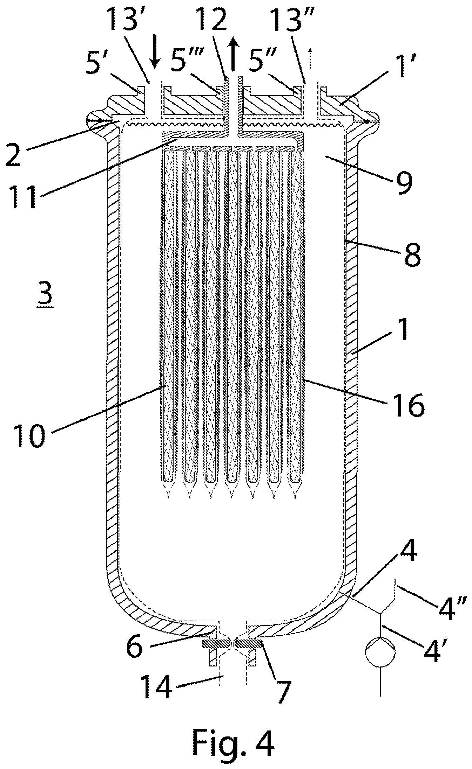

In der Figur 4 wird die eigentliche Filtration der erfindungsgemässen Vorrichtung dargestellt. Durch Anbringen eines Druckgefälles zwischen innerem Bereich 9 des Filtrationsbehälters und der Filtratseite 12 wird die Suspension filtriert. Das Druckgefälle wird entweder dadurch erzeugt, dass ein Überdruck durch den Eingangsanschluss 13' ins Behälterinnere 9 oder ein Unterdruck im Filtratausgang 12 erzeugt wird. Das Filtrat fliesst durch die Filterelemente 10, wird im Sammelstück 11 vereint und durch den Filtratablaufanschluss 12 abgeführt. Der Feststoff 16 sammelt sich dabei auf den Filterelementen 10. Der Stutzen 13" kann während der Filtration zur Abführung von Suspension oder zur Entlüftung der inneren Zone 9 genutzt werden.

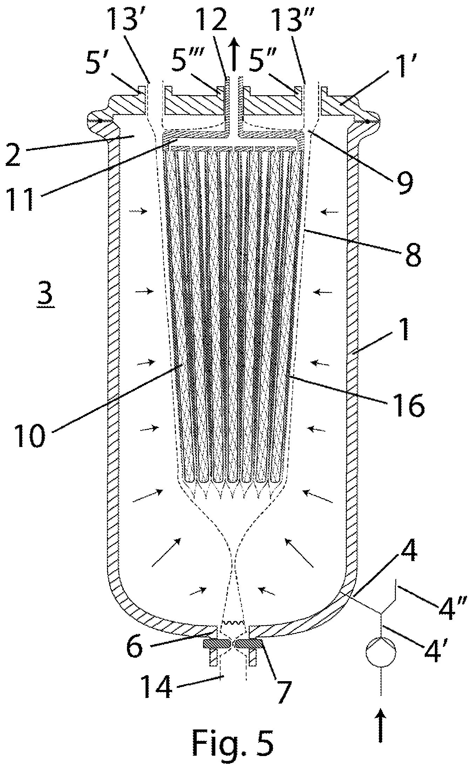

Die weiterführende Restvolumenfiltration ist in Figur 5 dargestellt. Ein Überdruck wird in die innere Druckbehälterzone 2 durch die Stutzen 4 und 4' eingebracht womit der flexible Filtrationsbehälter 8 zusammengedrückt wird. Durch Öffnen des Filtratablaufanschlusses 12 kann weiteres Filtrat abgeführt werden bis sich der Filtrationsbehälter völlig kompaktiert und sich keine Flüssigkeit mehr im Inneren des Filtrationsbehälters 9 befindet. Die äussere Krafteinwirkung presst zusätzlich die einzelnen Filterelemente 10 sowie den darauf gesammelten Feststoff 16 aus. Hierbei vermindern sich die Volumina zwischen den Filterelementen 10 und innerhalb der Filterelemente selbst, restliche Suspension in diesen Volumina kann somit besser abgeführt werden. In einer Weiterführung der Erfindung, kann der Feststoff 16 nun noch mit weiteren, durch die Anschlüsse 13' oder 13" eingebrachten Spülflüssigkeiten oder Gasen gewaschen und/oder getrocknet werden. In einer Weiterführung der Erfindung kann die Suspension während dem Zusammenpressen des flexiblen Behälters 8 durch die Anschlüsse 13' und 13" abgeführt werden.

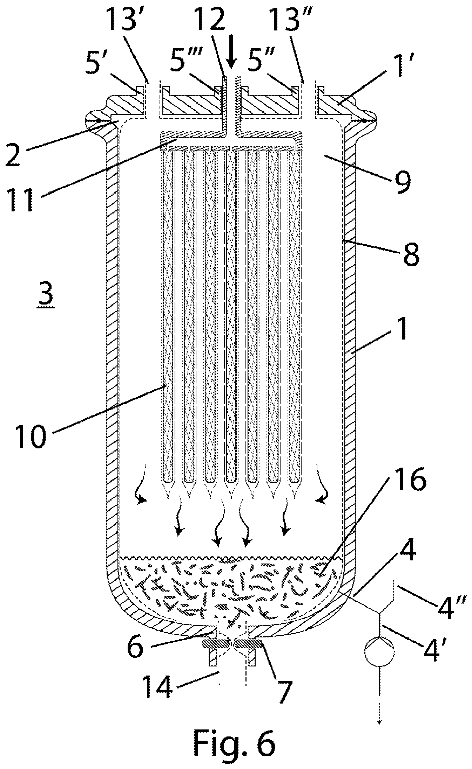

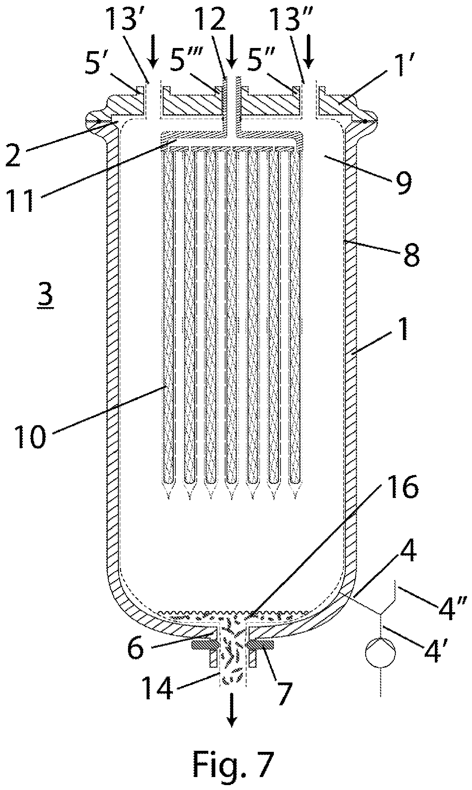

Figur 6 zeigt die Regeneration der Filterelemente 10 durch Abspülen des Feststoffes 16. Durch Rückspülen der Filterelemente entgegen der Filtrationsrichtung kann der Feststoff 16 von den Filterelementen 10 abgelöst werden. Hierfür wird Filtrat, Spülflüssigkeit oder ein Gas durch den Filtratablaufanschluss 12 und die Filterelemente 10 in die Innere Zone 9 des flexiblen Behälters 8 eingebracht. Der Feststoff 16 wird dabei abgesprengt, die Filterelemente 10 sind nun wieder frei. In einer Weiterführung kann der Filtrationszyklus nun von vorne beginnen (Figur 3) oder der aufkonzentrierte Feststoff kann im nächsten Schritt entleert werden (Figur 7). In einer Weiterführung der Erfindung kann der Feststoff zusätzlich auch durch Einbringen von Flüssigkeit oder Gasen durch die Anschlüsse 13', 13" abgewaschen werden. In einer Weiterführung der Erfindung kann die Rückspülung auch im befüllten Zustand, ohne die Restvolumenfiltration (Figur 5) durchgeführt werden. Der Feststoff 16 wird dabei von den Filterelementen 10 abgeschwemmt, womit diese für eine neue Filtration wieder freigegeben sind.

Figur 7 zeigt den Austrag des trockenen oder aufkonzentrierten Feststoffes 16 oder der restlichen Suspension. Der Verschlussmechanismus 7 wird geöffnet, der Feststoff 16 oder die Restflüssigkeit kann durch den Austragsanschluss 14 entweichen. Zusätzlich können durch Einbringen von Flüssigkeit oder Gasen durch die Anschlüsse 12, 13' oder 13" das Innere 9 des Filtrationsbehälters und die Filterelemente 10 gespült werden.

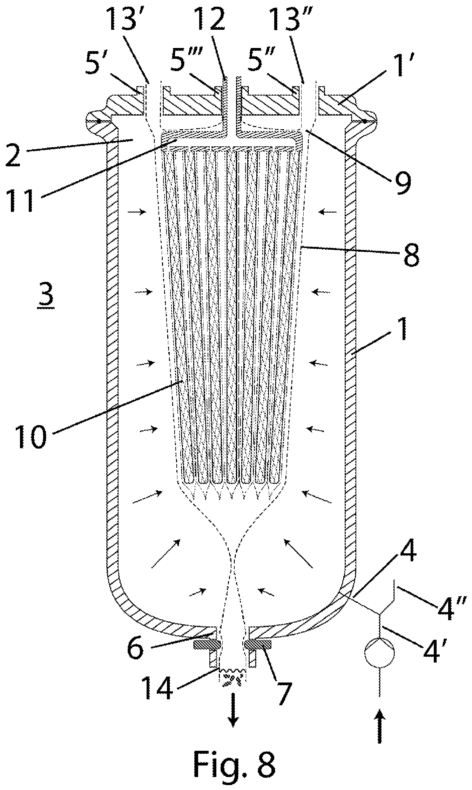

In Figur 8 wird der flexible Filtrationsbehälter durch Anbringen eines Druckes in der inneren Druckbehälterzone 2 ausgepresst. Letzte Reste an Feststoff 16, Suspension oder Spülflüssigkeit kann durch den Austragsanschluss 14 abgeführt werden. Der flexible Filtrationsbehälter ist nun vollständig geleert und evakuiert und kann nun aus dem Druckbehälter 1 entfernt oder für eine erneute Befüllung und folgende Filtration verwendet werden.

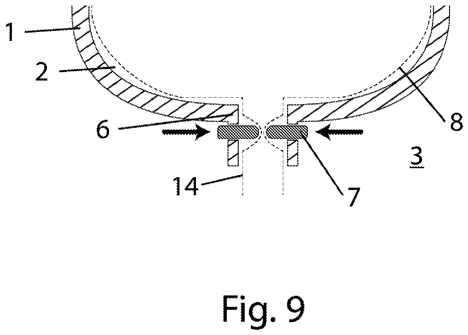

Die Figuren 9-11 zeigen verschiedene Ausführungen des Verschlussmechanismus 7 sowie der Abdichtung der inneren Druckbehälterzone 2 zur Umgebung 3. Die gezeigten Ansätze sind Beispiele und können in beliebigen Kombinationen ausgeführt werden.

In Figur 9 ist der Druckbehälter 1 dargestellt. Der flexible Behälter 8 ist mit einer Verlängerung 14 ausgestattet. In einer Ausführung besteht diese Verlängerung 14 aus demselben Material wie der flexible Behälter 8, zum Beispiel aus flexibler Kunststoff-Mehrschichtfolie. In einer Wandung des Druckbehälters 1 ist eine Durchführung 6 angebracht. Diese befindet sich vorzugsweise im unteren Bereich. Der flexible Behälter 8 wird im Druckbehälter 1 installiert wobei die Verlängerung 14 durch den Ausgang 6 für den Feststoffaustrag gebracht wird. Folgend auf den Austragsausgang 6 befindet sich ein Verschlussmechanismus 7, vorzugsweise eine Klemmvorrichtung, besonders bevorzugt ein Quetschventil, welcher es erlaubt die Verlängerung 14 des Filtrationsbehälters dichtend zu verschliessen ohne dabei in direkten Kontakt zum Feststoff oder der Suspension im Innern des Behälters zu kommen. Der Verschlussmechanismus dichtet ausserdem mindestens im geschlossenen Zustand, bevorzugt auch im offenen Zustand, die innere Druckbehälterzone 2 von der Umgebung 3 ab.

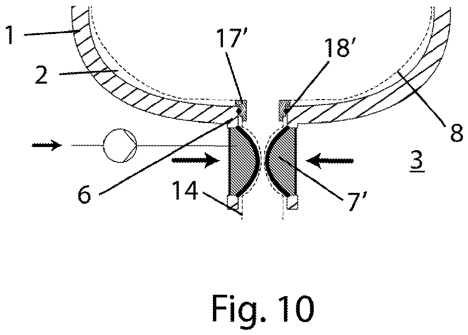

Figur 10 zeigt eine weitere Ausführung des Austragsmechanismus mit dem Verschlussmechanismus. Ein Verbindungsstück 17' ist an der flexiblen Wandung des flexiblen Behälters dichtend angebracht und wird bei der Installation des flexiblen Behälters in den Austragsausgang 6 des Druckbehälters 1 eingebracht, wobei mittels einer Dichtung 18', hier als O-Ring dargestellt, die innere Druckbehälterzone 2 von der Umgebung 3 abgedichtet wird. Die Verlängerung 14, bestehend aus einem Folienschlauch oder einem flexiblen Schlauchmaterial, zum Beispiel Silikon, ist dabei dichtend mit dem Verbindungsstück 17' verbunden und führt durch eine nachfolgende Klemmvorrichtung 7`. Als weiteres Beispiel ist diese dargestellt durch einen Membrankörper, welcher durch Anbringen von Druck eine Presskraft auf die Verlängerung 14 aufbringt und diese verschliesst. Auch hier wird der direkte Kontakt vom Ventil zum Feststoff oder der Flüssigkeit im flexiblen Behälter verhindert, was Vorteile für den sterilen Betrieb mit sich bringt.

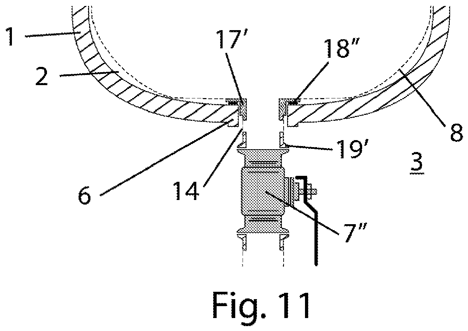

Figur 11 zeigt eine weitere Variante mit einer Flachdichtung 18" als Abdichtung des Verbindungsstücks 17' zum Druckbehälter 1. Die Verlängerung 14 des flexiblen Behälters 8 ist an dessen Ende mit einem weiteren Anschluss 19` versehen, welcher an ein Ventil 7", zum Beispiel an einen Kugelhahn angeschlossen werden kann.

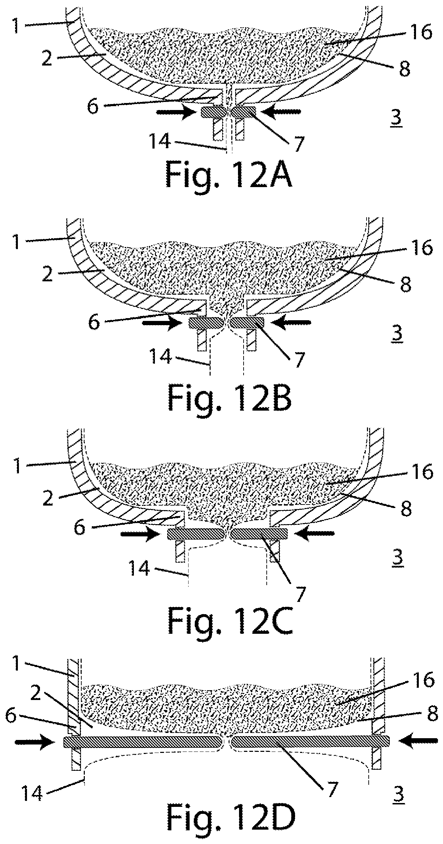

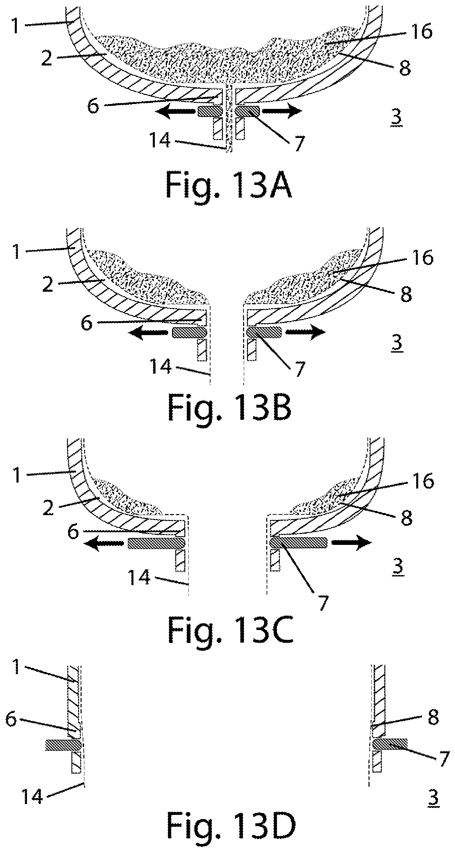

Figuren 12 und 13 zeigen Varianten der Erfindung mit einem Verschlussmechanismus 7 in verschiedenen Grössen im geschlossen (Figur 12A-D) sowie im offenen Zustand (Figur 13A-D). Bei Anwendungen mit groben Feststoffen oder Feststoffschlamm 16 und insbesondere bei sehr trockenem Feststoff ist ein Austrag insbesondere bei sehr kleiner Öffnung des Ausgangs für den Feststoffaustrag 6 oder des Austragsanschlusses 14 schwierig. Bei zu kleinen Austragsdurchmessern besteht die Gefahr, dass der Feststoff oder Feststoffschlamm 16 ungünstig oder gar nicht abfliesst oder der Austragsansschluss 14 verstopft. Es ist somit ein dem Feststoff angepasster Durchmesser für den Austragsstutzen 6, den Verschlussmechanismus 7, sowie für den Austragsanschluss 14 (in geöffnetem Zustand) zu wählen.

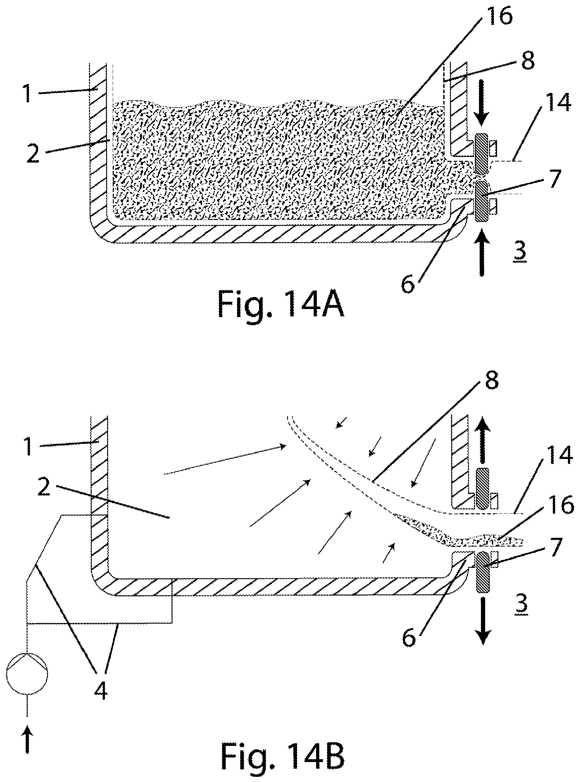

In Figur 14A ist eine Variante der Erfindung mit seitlichem Ausgang 6 für den Feststoffaustrag und Austragsanschluss 14 dargestellt. Der Feststoff 16 wird durch das Öffnen des Verschlussmechanismus 7 entleert (Figur 14B). Zusätzlich kann der flexible Behälter 8 durch das Anbringen eines Druckes in der Zone 2 durch den Anschluss 4 zusammengedrückt werden, was den kompletten Austrag des Feststoffes oder des Feststoffschlamms 16 begünstigt.

### Bezugszeichenliste

- 1: Druckbehälter
- 1': Deckel des Druckbehälters
- 2: Druckbehälterzone
- 3: Umgebung
- 4: Druckleitung
- 4': Druckluftzufuhr
- 4": Vakuumzufuhr
- 5': Eingangsstutzen
- 5": Ausgangsstutzen
- 5‴: Filtratablaufstutzen
- 6: Ausgang für Feststoffaustrag, Austragsausgang, Austragsstutzen
- 7: Verschlussmechanismus
- 7': Klemmvorrichtung, Quetschventil
- 7": Ventil
- 8: flexibler Behälter
- 8': Verbindung Filtratablaufanschluss zum flexiblen Behälter
- 9: Innere Zone des flexiblen Behälters
- 10: Filterelement
- 11: Sammelstück
- 12: Filtratablaufanschluss
- 13`: Eingangsanschluss
- 13": Ausgangsanschluss
- 14: Verlängerung, Austragsanschluss
- 15: Flüssigkeit oder Gas, Filtrat
- 16: Feststoff
- 17': Verbindungsstück
- 18`: O-Ring
- 18": Flachdichtung
- 19': Ventilanschluss

## Patentansprüche

1. Vorrichtung zur Abtrennung von Feststoffen aus Flüssigkeiten oder Gasen, umfassend einen Druckbehälter (1), mit mindestens einem Eingangsstutzen (5') für einen Eingangsanschluss (13'), mindestens einem Filtratablaufstutzen (5‴) für einen Filtratablaufanschluss (12), und mehreren Filterelementen (10), wobei die Filterelemente (10) parallel nebeneinander angeordnet und zu einem Filterpaket miteinander verbunden sind, wobei zwischen den einzelnen Filterelementen (10) über einen Grossteil ihrer vertikalen Längserstreckung ein Freiraum besteht, und wobei die Filterelemente (10) in einem flexiblen Behälter (8) angeordnet sind, der in dem Druckbehälter (1) angeordnet und gegenüber diesem dicht abgeschlossen ist, wobei der Druckbehälter (1) mindestens einen Ausgang (6) für den Feststoffaustrag und der flexible Behälter (8) mindestens einen Austragsanschluss (14) umfasst, wobei der Austragsanschluss (14) des flexiblen Behälters (8) durch den Ausgang (6) des Druckbehälters (1) geführt und gegenüber dem Druckbehälter (1) dicht abgeschlossen ist, wobei der Ausgang (6) und der Austragsanschluss (14) des flexiblen Behälters (8) mittels eines Verschlussmechanismus (7, 7', 7") gegenüber der Umgebung (3) ausserhalb des flexiblen Behälters (8) und des Druckbehälters (1) dichtend verschliessbar sind, **dadurch gekennzeichnet, dass** die Filterelemente (10) derart ausgebildet sind, dass sie zur Entleerung des flexiblen Behälters (8) zueinander zusammenpressbar sind, wobei sich im Inneren des Druckbehälters (1) zwischen der Druckbehälter-Innenwand und der Aussenwand des flexiblen Behälters (8) eine abgedichtete Druckbehälterzone (2) befindet, und wobei am Druckbehälter (1) eine Druckleitung (4) angebracht ist, um einen Überdruck in der Druckbehälterzone (2) im Inneren des Druckbehälters (1) einzubringen um den flexiblen Behälter (8) zusammenzudrücken und die Filterelemente (10) im flexiblen Behälter (8) zusammenzupressen.

2. Vorrichtung nach Anspruch 1, **dadurch gekennzeichnet, dass** der Verschlussmechanismus (7) eine Klemmvorrichtung ist.

3. Vorrichtung nach Anspruch 1, **dadurch gekennzeichnet, dass** der Verschlussmechanismus (7) ein Quetschventil ist.

4. Vorrichtung nach einem der vorhergehenden Ansprüche, **dadurch gekennzeichnet, dass** die Abdichtung zwischen dem Austragsanschluss (14) des flexiblen Behälters (8) und dem Ausgang (6) des Druckbehälters (1) mittels einer Dichtung erfolgt.

5. Vorrichtung nach Anspruch 4, **dadurch gekennzeichnet, dass** die Dichtung ein O-Ring oder eine Flachdichtung ist.

6. Vorrichtung nach einem der vorhergehenden Ansprüche, **dadurch gekennzeichnet, dass** der Durchmesser des Ausgangs (6) für den Feststoffaustrag mindestens 15 mm, insbesondere mindestens 20 mm, vorzugsweise mindestens 25 mm beträgt.

7. Vorrichtung nach Anspruch 6, **dadurch gekennzeichnet, dass** der Durchmesser des Ausgangs (6) für den Feststoffaustrag gleich gross ist wie der Durchmesser des Druckbehälters (1).

8. Vorrichtung nach einem der vorhergehenden Ansprüche, **dadurch gekennzeichnet, dass** die Filterelemente (10) hängend angeordnet sind.

9. Vorrichtung nach einem der vorhergehenden Ansprüche, **dadurch gekennzeichnet, dass** die parallel nebeneinander angeordneten Filterelemente (10) jeweils flach ausgebildet sind.

10. Vorrichtung nach einem der Ansprüche 1-8, **dadurch gekennzeichnet, dass** die Filterelemente (10) rund ausgebildet sind.

11. Vorrichtung nach einem der vorhergehenden Ansprüche, **dadurch gekennzeichnet, dass** der flexible Behälter (8) aus dem Druckbehälter (1) entnehmbar ist.

12. Vorrichtung nach einem der vorhergehenden Ansprüche, **dadurch gekennzeichnet, dass** der mindestens eine Ausgang (6) für den Feststoffaustrag und der Austragsanschluss (14) des flexiblen Behälters (8) im unteren Bereich des Druckbehälters (1) und des flexiblen Behälters (8) angeordnet sind.

13. Vorrichtung nach einem der vorhergehenden Ansprüche, **dadurch gekennzeichnet, dass** der flexible Behälter (8) Eingangs- und Ausgangsanschlüsse (13', 13") aufweist und die Eingangs- und Ausgangsanschlüsse (13', 13") im Inneren des flexiblen Behälters (8) mit einem Schlauch versehen sind.

14. Vorrichtung nach Anspruch 13, **dadurch gekennzeichnet, dass** das Ende des Schlauches am flexiblen Behälter (8) mit einer Düse versehen ist.

15. Anwendung der Vorrichtung nach einem der vorhergehenden Ansprüche zur Filtration von Feststoffen aus Flüssigkeiten oder Gasen und zum Austrag des Feststoffs aus der Vorrichtung.

16. Verfahren zur Filtration von Feststoffen aus Flüssigkeiten oder Gasen und zum Austrag des Feststoffes mittels der Vorrichtung nach einem der Ansprüche 1-14 umfassend die Schritte
a) Anbringen einer Druckdifferenz zwischen dem Innenraum des flexiblen Behälters (8) und dem Filtratablauf,
b) Befüllen des flexiblen Behälters (8) mit einer Suspension oder Gas,
c) Anbringen eines Unterdruckes im Filtratablauf oder eines Überdrucks im flexiblen Behälter (8),
d) Auspressen des flexiblen Behälters (8),
e) Durchspülen des Feststoffes mit Spülflüssigkeiten oder Gasen durch den Eingangsanschluss (13'),
f) Abspülen des Feststoffes von den Filterelementen (10) durch den Filtratablaufanschluss (12) zur Regeneration der Filterelemente (10) für den nächsten Zyklus,
g) Öffnen des Verschlussmechanismus (7, 7', 7") und Austrag des Feststoffes durch den Austragsanschluss (14) des flexiblen Behälters (8) am Ausgang (6) des Druckbehälters (1).

17. Verfahren nach Anspruch 16, **dadurch gekennzeichnet, dass** die Schritte a) bis g) ein- oder mehrmals wiederholt werden.

## Claims

1. Device for separating solids from liquids or gases, comprising a pressure vessel (1) with at least one inlet nozzle (5') for an inlet connection (13'), at least one filtrate discharge nozzle (5‴) for a filtrate discharge connection (12), and multiple filter elements (10), wherein the filter elements (10) are arranged parallel to one other, and are connected to one other to form a filter package, wherein a free space exists between the individual filter elements (10) over a large part of their vertical longitudinal extension, and wherein the filter elements (10) are arranged in a flexible container (8) which is arranged in the pressure vessel (1) and sealed tightly relative thereto, wherein the pressure vessel (1) comprises at least one outlet (6) for discharging solid material, and the flexible container (8) comprises at least one discharge connection (14), wherein the discharge connection (14) of the flexible container (8) is guided through the outlet (6) of the pressure vessel (1) and is sealed tightly relative to the pressure vessel (1), wherein the outlet (6) and the discharge connection (14) of the flexible container (8) can be sealed tightly relative to the environment (3) outside the flexible container (8) and the pressure vessel (1) by means of a closure mechanism (7, 7', 7''), **characterized in that** the filter elements (10) are constructed in such manner that they can be pressed together to evacuate the flexible container (8), wherein a sealed pressure vessel zone (2) exists between the inner wall of the pressure vessel (1) and the outer wall of the flexible container (8) inside the pressure vessel (1), and wherein a pressure line (4) is fixed to the pressure vessel (1) to introduce an overpressure into the pressure vessel zone (2) inside the pressure vessel (1) in order to compress the flexible container (8) and press the filter elements (10) in the flexible container (8) together.

2. Device according to Claim 1, **characterized in that** the closure mechanism (7) is a clamping device.

3. Device according to Claim 1, **characterized in that** the closure mechanism (7) is a pinch valve.

4. Device according to any one of the preceding claims, **characterized in that** the sealing between the discharge connection (14) of the flexible container (8) and the outlet (6) of the pressure vessel (1) is assured by means of a seal.

5. Device according to Claim 4, **characterized in that** the seal is an O-ring or flat seal.

6. Device according to any one of the preceding claims, **characterized in that** the diameter of the outlet (6) for the solid discharge is at least 15 mm, particularly at least 20 mm, preferably at least 25 mm.

7. Device according to Claim 6, **characterized in that** the diameter of the outlet (6) for the solid discharge is the same size as the diameter of the pressure vessel (1) .

8. Device according to any one of the preceding claims, **characterized in that** the filter elements (10) are mounted in suspended manner.

9. Device according to any one of the preceding claims, **characterized in that** the filter elements (10) arranged parallel to one another are each of flat construction.

10. Device according to any one of Claims 1-8, **characterized in that** the filter elements (10) are of round design.

11. Device according to any one of the preceding claims, **characterized in that** the flexible container (8) is removable from the pressure vessel (1).

12. Device according to any one of the preceding claims, **characterized in that** the at least one outlet (6) for the solid discharge and the discharge connection (14) of the flexible container (8) are arranged in the lower region of the pressure vessel (1) and of the flexible container (8).

13. Device according to any one of the preceding claims, **characterized in that** the flexible container (8) has inlet and outlet connections (13', 13"), and the inlet and outlet connections (13', 13") are provided with a tube inside the flexible container (8).

14. Device according to Claim 13, **characterized in that** the end of the tube on the flexible container (8) is provided with a nozzle.

15. Use of the device according to any one of the preceding claims for the filtration of solid materials from liquids or gases and for discharging the solid material from the device.

16. Method for the filtration of solid materials from liquids or gases and for discharging the solid material by means of the device according to any one of Claims 1-14, comprising the steps of
a) applying a pressure differential between the interior of the flexible container (8) and the filtrate discharge,
b) filling the flexible container (8) with a suspension or gas,
c) applying an underpressure in the filtrate discharge or an overpressure in the flexible container (8),
d) pressing out the flexible container (8),
e) flushing the solid material with flushing liquids or gases through the inlet connection (13'),
f) rinsing the solid material from the filter elements (10) through the filtrate discharge connection (12) to regenerate the filter elements (10) for the next cycle,
g) opening the closure mechanism (7, 7', 7") and discharging the solid material through the discharge connection (14) of the flexible container (8) at the outlet (6) of the pressure vessel (1).

17. Method according to Claim 16, **characterized in that** steps a) to g) are repeated once or multiple times.

## Revendications

1. Dispositif, destiné à séparer des matières solides de liquides ou de gaz, comprenant un réservoir sous pression (1), pourvu d'au moins une tubulure d'entrée (5') pour un raccord d'entrée (13'), d'au moins une tubulure d'écoulement (5''') du filtrat pour un raccord d'écoulement (12) du filtrat, et de plusieurs éléments filtrants (10), les éléments filtrants (10) étant placés en parallèle côte à côte et étant assemblés les uns avec les autres en un bloc filtrant, entre les éléments filtrants (10) individuels, un espace libre restant ménagé sur une majeure partie de leur extension longitudinale verticale et les éléments filtrants (10) étant placés dans un réservoir (8) souple, qui est placé dans le réservoir sous pression (1) et fermé de manière étanche par rapport à celui-ci, le réservoir sous pression (1) comprenant au moins une sortie (6) pour l'évacuation des matières solides et le réservoir (8) souple comprenant au moins un raccord d'évacuation (14), le raccord d'évacuation (14) du réservoir (8) souple étant tiré à travers la sortie (6) du réservoir sous pression (1) et fermé de manière étanche par rapport au réservoir sous pression (1), la sortie (6) et le raccord d'évacuation (14) du réservoir (8) souple étant susceptibles d'être fermés de manière à assurer l'étanchéité par rapport à l'environnement (3) au moyen d'un mécanisme de fermeture (7, 7', 7") à l'extérieur du réservoir (8) souple et du réservoir sous pression (1), **caractérisé en ce que** les éléments filtrants (10) sont conçus de telle sorte, que pour vider le réservoir (8) souple, ils soient compressibles les uns contre les autres, à l'intérieur du réservoir sous pression (1), entre la paroi intérieure du réservoir sous pression et la paroi extérieure du réservoir (8) souple se trouvant une zone (2) de réservoir sous pression étanchéifiée et sur le réservoir sous pression (1) étant montée une conduite sous pression (4), pour introduire une surpression dans la zone (2) de réservoir sous pression à l'intérieur du réservoir sous pression (1), pour comprimer le réservoir (8) souple et compresser les uns contre les autres les éléments filtrants (10) dans le réservoir (8) souple.

2. Dispositif selon la revendication 1, **caractérisé en ce que** le mécanisme de fermeture (7) est un dispositif de serrage.

3. Dispositif selon la revendication 1, **caractérisé en ce que** le mécanisme de fermeture (7) est un cylindre de fermeture.

4. Dispositif selon l'une quelconque des revendications précédentes, **caractérisé en ce que** l'étanchéité entre le raccord d'évacuation (14) du réservoir (8) souple et la sortie (6) du réservoir sous pression (1) est assurée au moyen d'un joint.

5. Dispositif selon la revendication 4, **caractérisé en ce que** le joint est une bague torique ou un joint plat.

6. Dispositif selon l'une quelconque des revendications précédentes, **caractérisé en ce que** le diamètre de la sortie (6) pour l'évacuation des matières solides est d'au moins 15 mm, notamment d'au moins 20 mm, de préférence d'au moins 25 mm.

7. Dispositif selon la revendication 6, **caractérisé en ce que** le diamètre de la sortie (6) pour l'évacuation des matières solides est de même dimension que le diamètre du réservoir sous pression (1).

8. Dispositif selon l'une quelconque des revendications précédentes, **caractérisé en ce que** les éléments filtrants (10) sont placés en étant suspendus.

9. Dispositif selon l'une quelconque des revendications précédentes, **caractérisé en ce que** les éléments filtrants (10) placés côte à côte à la parallèle sont conçus chacun sous forme plate.

10. Dispositif selon l'une quelconque des revendications 1 à 8, **caractérisé en ce que** les éléments filtrants (10) sont conçus sous forme ronde.

11. Dispositif selon l'une quelconque des revendications précédentes, **caractérisé en ce que** le réservoir (8) souple peut se retirer du réservoir sous pression (1).

12. Dispositif selon l'une quelconque des revendications précédentes, **caractérisé en ce que** l'au moins une sortie (6) pour l'évacuation des matières solides et le raccord d'évacuation (14) du réservoir (8) souple sont placés dans la zone inférieure du réservoir sous pression (1) et du réservoir (8) souple.

13. Dispositif selon l'une quelconque des revendications précédentes, **caractérisé en ce que** le réservoir (8) souple comporte des raccords d'entrée et de sortie (13', 13") et **en ce qu'**à l'intérieur du réservoir (8) souple, les raccords d'entrée et de sortie (13', 13") sont munis d'un flexible.

14. Dispositif selon la revendication 13, **caractérisé en ce que** l'extrémité du flexible sur le réservoir (8) souple est munie d'une buse.

15. Utilisation du dispositif selon l'une quelconque des revendications précédentes pour filtrer des matières solides hors de liquides ou de gaz et pour évacuer les matières solides du dispositif.

16. Procédé, destiné à filtrer des matières solides hors de liquides ou de gaz, et à évacuer les matières solides au moyen du dispositif selon l'une quelconque des revendications 1 à 14, comprenant les étapes consistant à
a) appliquer une pression différentielle entre l'espace intérieur du réservoir (8) souple et l'écoulement du filtrat,
b) remplir le réservoir (8) souple d'une suspension ou d'un gaz,
c) appliquer une dépression dans l'écoulement de filtrat ou une surpression dans le réservoir (8) souple,
d) presser le réservoir (8) souple,
e) rincer les matières solides avec des liquides de rinçage ou des gaz à travers le raccord d'entrée (13'),
f) éliminer par rinçage les matières solides des éléments filtrants (10) à travers le raccord d'écoulement (12) du filtrat, pour régénérer les éléments filtrants (10) pour le cycle suivant,
g) ouvrir le mécanisme de fermeture (7, 7', 7") et évacuer les matières solides à travers le raccord d'évacuation (14) du réservoir (8) souple sur la sortie (6) du réservoir sous pression (1).

17. Procédé selon la revendication 16, **caractérisé en ce que** les étapes a) à g) sont répétées une ou plusieurs fois.
